Europäisches Patentamt

European Patent Office

Office européen des brevets

(11) Publication number: **0 653 744 A2**

# EUROPEAN PATENT APPLICATION

(21) Application number: **94115759.6**

(22) Date of filing: **06.10.94**

(51) Int. Cl.⁶: **G11B 5/008**, G11B 5/024,
G11B 15/12

(30) Priority: **16.11.93 KR 9324375**

(43) Date of publication of application:
**17.05.95 Bulletin 95/20**

(84) Designated Contracting States:
**DE FR GB NL**

(71) Applicant: **DAEWOO ELECTRONICS CO., LTD**
**541, 5-Ga, Namdaemoon-Ro**
**Jung-Gu,**
**Seoul 100-095 (KR)**

(72) Inventor: **Kim, Ul-Je**
**202-100, Sang-do 4-Dong**
**Dongjak-Ku,**
**Seoul (KR)**
Inventor: **Lee, Kyeong-Won**
**80-27, Yeokchon-Dong, Eunpyung-Ku**
**Seoul, Korea (KR)**

(74) Representative: **Turi, Michael, Dipl.-Phys. et al**
**Samson & Partner**
**Widenmayerstrasse 5**
**D-80538 München (DE)**

(54) **Stationary full-width erasing apparatus.**

(57) A stationary full-width erasing apparatus for erasing a prerecorded signal on a magnetic tape comprises an erasing head assembly having N number of stationary erasing heads vertically arranged along the longitudinal direction of the surface thereof, an oscillator, in response to the recording control signal, for providing an oscillation signal to each of the erasing heads and a sequential circuit for receiving the recording control signal and sequentially controlling the erasing operation of the erasing heads.

FIG.2

Rank Xerox (UK) Business Services
(3.10/3.09/3.3.4)

Field of the Invention

The present invention relates to an erasing apparatus for use in a magnetic recording and reproducing system.

Description of the Prior Art

A conventional magnetic recording and reproducing system such as video cassette recorder ("VCR") includes a rotatable helical scanner having a pair of magnetic recording heads installed in a diametrically opposite relationship along the circumferential outer surface thereof. A magnetic tape is wound obliquely around the rotatable helical scanner so that video information may be recorded or reproduced on or from the magnetic tape by the action of the recording heads in accordance with the advance of the magnetic tape concurrently with the rotation of the rotatable helical scanner.

The conventional VCR is further equipped with a full-erasing head for a full-tape width erase of the magnetic tape. The full-erasing head is positioned stationary in front of the rotatable helical scanner and may be used to erase a previously recorded signal prior to recording a new signal on the erased portion of the magnetic tape.

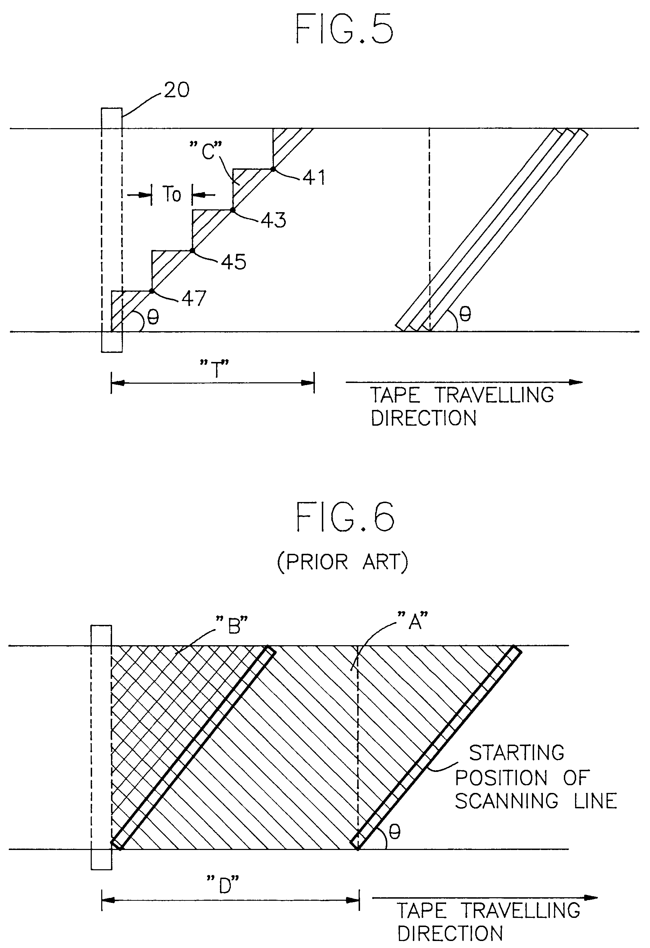

In such a VCR, however, a non-erased portion may remain to exist between the inclined scanning line scanned by the recording head and the full-erasing head when a recording operation is started along with an erasing operation, as shown in FIG. 6 as an area marked "A". Therefore, a new signal may be written over the non-erased portion, which produce "rainbow noises" causing a poor picture for an overlapping time period, e.g., 3 to 4 seconds, during the reproduction of the newly recorded signal from the magnetic tape.

In order to remove or reduce the possibility of having a non-erased portion left on the magnetic tape, therefore, there has been proposed a VCR system employing a mechanism to make a starting position of the scanning line substantially coincide with an erasing starting position by adjusting or delaying a starting point of recording for a predetermined time period "D" during which the non-erased portion is passed without recording thereon. However, there still exists the possibility of having an overwritten portion on the magnetic tape between the erasing head and the delayed scanning line, as shown in FIG. 6 as a triangular area marked "B".

Therefore, further efforts have been made to minimize the gap between the starting position of the scanning line and the erasing starting position. As a result, a flying erasing head has been suggested, which is further mounted on the rotatable helical scanner with relation to the recording heads, as disclosed in U.S. Patent Number 5,193,045 issued to Missionary Kochi et al. However, need has contained to exist for a VCR equipped with a stationary erasing head which is capable of effectively reducing the rainbow noises.

Summary of the Invention

It is, therefore, a primary object of the invention to provide a stationary full-width erasing apparatus for effectively eliminating a non-erased portion on a magmatic tape during a recording process thereon.

In accordance with the present invention, there is provided an erasing apparatus in a magnetic recording and reproducing system for erasing a prerecorded signal on a magnetic tape, wherein the magnetic recording and reproducing system has a rotatable helical scanner with a recording head for recording a new signal on the erased area on the magnetic tape in accordance with a recording control signal, which comprises: an erasing head assembly positioned stationary in front of the rotatable helical scanner and having a number of stationary erasing heads vertically arranged along the longitudinal direction of the surface thereof, aligned over the full-width of the magnetic tape; an oscillator, in response to the recording control signal, for providing an oscillation signal to each of the erasing heads; and a sequential circuit for receiving the recording control signal and sequentially controlling the erasing operation of the erasing heads.

Brief Description of the Drawings

The above and other objects and features of the present invention will become apparent from the following description of preferred embodiments taken in conjunction with the accompanying drawings, in which:

FIG. 1 shows a schematic block diagram of an erasing apparatus for use with a rotatable helical scanner in accordance with the invention;

FIG. 2 presents a perspective view of the erasing head assembly shown in FIG. 1;

FIG. 3 illustrates a detailed block diagram of the sequential circuit shown in FIG. 1;

FIG. 4 offers a timing diagram generated from the respective elements in the sequential circuit;

FIG. 5 depicts the contour of the erased portion formed on a magnetic tape in accordance with the invention; and

FIG. 6 exemplifies the non-erased portion left on a magnetic tape in accordance with the prior art.

Detailed Description of the Preferred Embodiments

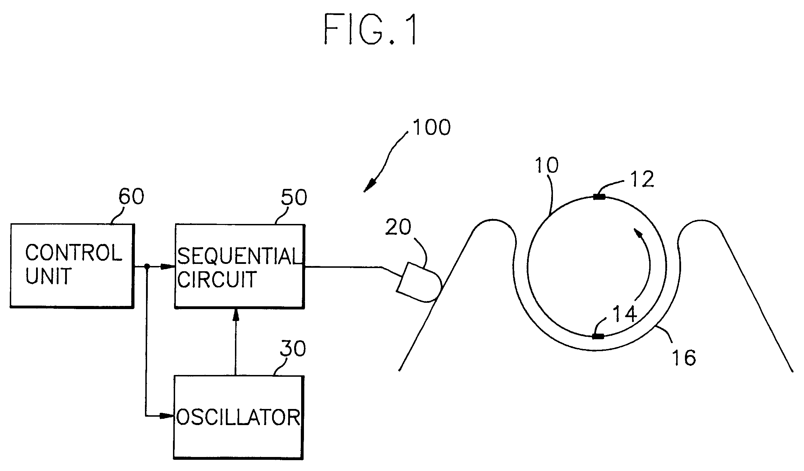

Referring to FIG. 1, there is shown a full-erasing apparatus, generally depicted as reference numeral 100, for use with a rotatable helical scanner 10 around which a magnetic tape 16 is wound to record video information through the use of a pair of recording heads 12 and 14.

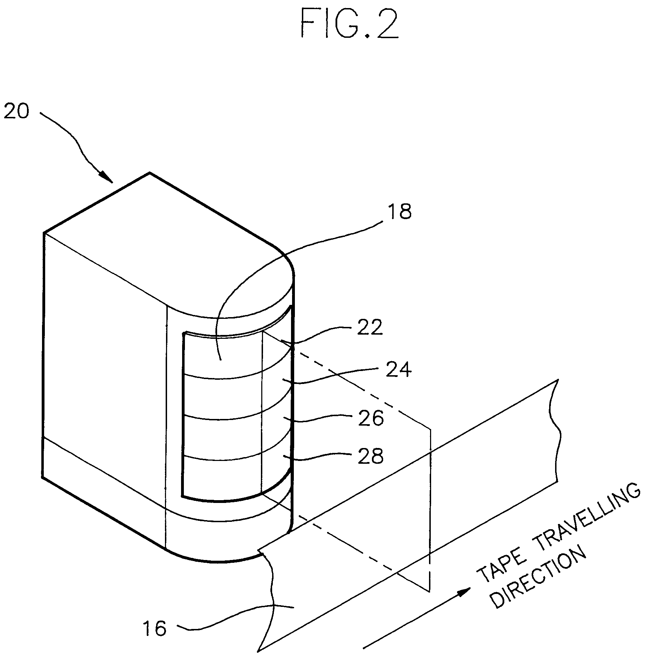

The erasing apparatus 100 includes an erasing head assembly 20, an oscillator 30, a sequential circuit 50 and a control unit 60. The erasing head assembly 20 is positioned stationary in front of the rotatable helical scanner 10 apart therefrom by a predetermined distance. As best shown in FIG. 2, the erasing head assembly 20 includes N number of erasing heads, among which only four erasing heads 22, 24, 26 and 28 are shown therein wherein N is a positive integer. The erasing heads 22, 24, 26 and 28 are vertically arranged along the longitudinal direction of the rounded front surface 18 contacting with the tape 16 of the erasing head assembly 20, aligned over the full-width of the magnetic tape 16.

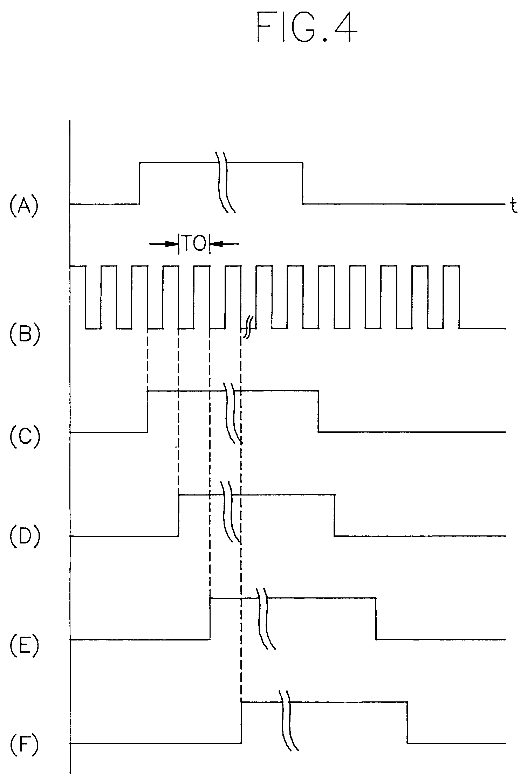

For recording purpose, the control unit 60 provides a recording control signal, e.g., a consecutive logic high signal during the recording as shown in FIG. 4A, to the oscillator 30 and the sequential circuit 50. The oscillator circuit 30, in response to the control signal, generates an oscillation signal which is an erasing current having a frequency of about 70 KHz, 60 $V_{P-P}$. The oscillation signal from the oscillator 30 is supplied to each of the erasing heads 22, 24, 26 and 28 in the erasing head assembly 20 through the sequential circuit 50. The sequential circuit 50 serves to Produce a driving signal which is used to sequentially initiate the erasing operation of each of the erasing heads 22, 24, 26 and 28 at regular periods $T_0$. The order of the erasing operation of the erasing heads 22, 24, 26 and 28 is sequentially made downward, which is in a reverse direction to the tracing direction of the recording heads 12 and 14 scanning obliquely upward the magnetic tape 16.

FIG. 5 illustrates the erasing operation of the erasing head assembly 20 with respect to the magnetic tape. As each of the erasing heads 22, 24, 26 and 28 is sequentially operated by the sequential circuit 50 with respect to the moving tape, an erased portion having a stepped contour is formed on the magnetic tape 16 at the beginning and at the end of the erasing operation along the travelling direction of the magnetic tape 16. The stepped contour has four corners 41, 43, 45 and 47 made by the erasing operation of the erasing heads 22, 24, 26 and 28, respectively. In accordance with the invention, a line having an inclined angle "$\theta$" which connects the corners 41, 43, 45 and 47 of the stepped contour is provided so that said inclined angle "$\theta$" coincides with that of the scanning line or the tracing angle of the recording heads 12 and 14. It is achieved by adjusting the period $T_0$ for the erasing operation of the erasing heads 22, 24, 26 and 28. The period $T_0$ can be derived as:

$$T_0 = T/N$$

wherein T represents the travelling time period of the magnetic tape during which the magnetic tape is scanned by a recording head to form a scanning line and N represents the number of the erasing heads.

Accordingly, since the angle of the scanning line is equal to that of the line connecting the corners of the stepped contour, it is possible to make the starting point of the scanning line close to the erasing position. In accordance with the invention, the recording starting position is set at the line connecting the corners 41, 43, 45 and 47 of the stepped contour. As a result, the non-erased portion is limited to only four right-angled triangular portions "C" formed between the scanning line and the lower part of the stepped contour. Accordingly, the rainbow noises can be effectively reduced within the area of the limited non-erased portions which may be overwritten with a new signal thereon, as compared with the area of the non-erased portion "B" shown in FIG. 6. Therefore, it can be appreciated that the larger the number of the erasing heads, the less the area of the non-erased portion will remain.

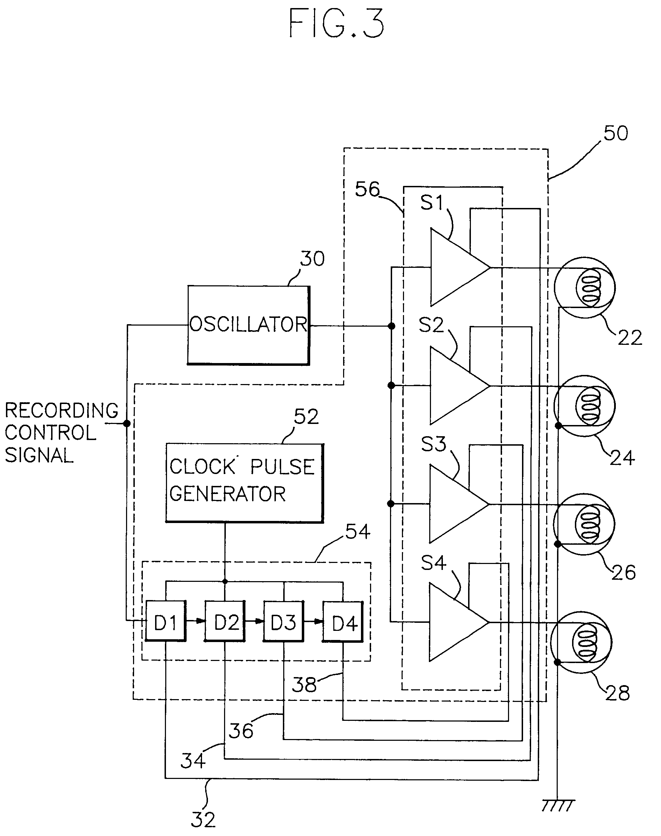

Referring now to FIG. 3, there is shown a detailed block diagram of the sequential circuit 50. The sequential circuit 50 includes a clock pulse generator 52, a four stage shift register 54 and a switching circuit 56. The clock pulse generator 52 generates a clock pulse signal having the period $T_0$ as shown in FIG. 4B. The clock pulse signal from the clock generator 52 is supplied to the shift register 54 which consists of a set of four flip-flop D1, D2, D3 and D4 in series, each of which serves as a delaying device controlled by the clock pulse signal.

The delaying devices D1, D2, D3 and D4 sequentially delay the control signal from the control unit 60 (as set forth above with reference to FIG. 4A) to produce the delayed control signal on their output lines 32, 34, 36, and 38, respectively, at each time a falling edge of the clock pulse signal. Accordingly, the shift register 54 generates, as the driving signal, the control signal delayed by the period $T_0$ step by step, as shown in FIGs. 4C, 4D, 4E and 4F, respectively. The delayed control signals by each period $T_0$ generated from the shift register 54 are provided to the switching circuit 56 through the output lines 32, 34, 36, and 38, respectively.

The switching circuit 56 is connected between the oscillator 30 and the erasing heads 22, 24, 26 and 28 and has a set of four three-state gates S1, S2, S3 and S4. Each of the three-state gates S1, S2, S3 and S4 has a control input connected to its corresponding delay devices D1, D2, D3 or D4, an input terminal connected to the oscillator 30 and an output terminal connected to its corresponding erasing head 22, 24, 26 or 28, respectively. Each of the three-state gates S1, S2, S3 and S4, in response to each of the delayed control signals sequentially provided from the shift register 54, is enabled one by one at each period $T_0$. Accordingly, the oscillation signal is sequentially supplied through the three-state gates S1, S2, S3 and S4 to the erasing heads 22, 24, 26 and 28 to thereby initiate the erasing operation of the erasing heads step by step. As a result, as set forth above, the stepped contour as shown in FIG. 5 is derived through the use of the present erasing apparatus.

While the present invention has been shown and described with respect to the preferred embodiments, it will be apparent to those skilled in the art that many changes and modifications may be made without departing from the spirit and scope of the invention as defined in the appended claims.

## Claims

1. An erasing apparatus in a magnetic recording and reproducing system for erasing a prerecorded signal on a magnetic tape, wherein the magnetic recording and reproducing system has a rotatable helical scanner with a recording head for recording a new signal on the erased portion of the magnetic tape in accordance with a recording control signal, which comprises:

   an erasing head assembly positioned stationary in front of the rotatable helical scanner and having N number of erasing heads vertically arranged along the longitudinal direction of the surface thereof, aligned over the full-width of the magnetic tape wherein N is a positive integer;

   an oscillator, in response to the recording control signal, for providing an oscillation signal to each of the erasing heads; and

   a sequential circuit for receiving the recording control signal and sequentially controlling the erasing operation of the erasing heads.

2. The apparatus as recited in claim 1, wherein the sequential circuit includes:

   means for generating a clock pulse having a period $T_0$;

   delaying means having said N number of delay devices in series to sequentially delay the control signal for producing said N number of driving signals stepwise delayed by the period $T_0$ by each of the delay devices; and

   switching means having said N number of switching devices, each switching device connected between the oscillator and its corresponding erasing head for coupling the oscillation signal to the corresponding erasing head in response to its corresponding driving signal from the delaying means.

3. The apparatus as recited in claim 2, wherein the order of the erasing operation carried out by the erasing heads is sequentially made downward so that an erased portion having a stepped contour is formed on the magnetic tape at the beginning and at the end of each erasing operation along the travelling direction of the magnetic tape, the stepped contour having said N number of corners made by the erasing operation of said N number of the erasing heads, respectively.

4. The apparatus as recited in claim 3, wherein the period $T_0$ is represented as:

   $$T_0 = T/N$$

   wherein T represents the travelling time period of the magnetic tape during which the magnetic tape is scanned by the recording head to form a scanning line and N represents the number of the erasing heads.

5. The apparatus as recited in claim 4, wherein the recording starting position is set at the line connecting the corners of the stepped contour.

6. A magnetic recording and reproducing system comprising the erasing apparatus recited in any of claims 1 to 5.

7. A video cassette recorder comprising the erasing apparatus recited in any of claims 1 to 5.

# FIG.1

# FIG.2

# FIG.3

# FIG.4

# FIG.5

TAPE TRAVELLING
DIRECTION

# FIG.6

(PRIOR ART)

STARTING
POSITION OF
SCANNING LINE

TAPE TRAVELLING
DIRECTION